# EUROPÄISCHE PATENTSCHRIFT

(11) **EP 4 380 897 B1**
(45) Veröffentlichungstag und Bekanntmachung des Hinweises auf die Patenterteilung: **04.12.2024**
(21) Anmeldenummer: 22812565.4
(22) Anmeldetag: 28.10.2022
(51) Int. Cl.: C01B 32/205

(54) **VERFAHREN ZUM WASSERARMEN HERSTELLEN VON GRAPHIT AUS PAPIER**
METHOD FOR THE LOW-WATER PRODUCTION OF GRAPHITE FROM PAPER
MÉTHODE DE PRODUCTION DE GRAPHITE À FAIBLE TENEUR EN EAU À PARTIR DE PAPIER

(43) Veröffentlichungstag der Anmeldung: 12.06.2024
(73) Patentinhaber: Nippon Kornmeyer Carbon Group GmbH, 53578 Windhagen (DE)
(72) Erfinder: Die Erfindernennung liegt noch nicht vor
(74) Vertreter: Lippert Stachow Patentanwälte Rechtsanwälte Partnerschaft mbB
(86) Internationale Anmeldenummer: PCT/EP2022/080232
(87) Internationale Veröffentlichungsnummer: WO 2024/088543

(56) Entgegenhaltungen:
- CN-A- 109 437 192
- CN-A- 110 902 675
- DE-B- 1 113 214
- JP-A- 2016 179 923
- US-A1- 2022 162 073

## Beschreibung

Die Erfindung betrifft ein Verfahren zum wasserarmen Herstellen von Graphit mit niedriger Dichte aus Papier, bevorzugt aus Altpapier, zur Verwendung als Dämmmaterial.

Da Altpapier in sehr großen Mengen anfällt, bietet es sich an, dieses nicht nur zu recyceln, sondern auch zur Herstellung von Graphit für verschiedenste Anwendungsfälle einzusetzen.

Die Aufgabe der Erfindung besteht deshalb darin, ein kostengünstiges, einfaches und nachhaltiges Verfahren zur Herstellung von Graphit mit niedriger Dichte aus Papier, bevorzugt Altpapier, zu schaffen, das auch als Dämmmaterial verwendet werden kann und bei dem die Verwendung von Wasser auf ein Minimum reduziert werden kann.

Die der Erfindung zugrundeliegende Aufgabe wird dadurch gelöst,
- dass Papier/Altpapier, Papierschnipsel oder -streifen in einem geeigneten Behälter so lange in Dimethylsulfoxid (DMSO) eingeweicht werden, bis sich das Papier in Fasern aufgelöst hat,
- dass den in Dimethylsulfoxid gelösten Papierfasern Polyacrylnitril (PAN) unter Rühren hinzugemischt wird, bis eine Paste, oder ein Gemisch mit pastenähnlicher Konsistenz entstanden ist,
- dass die Paste in eine geeignete Form eingebracht und nachfolgend überschüssige Flüssigkeit durch Pressen aus der Paste gedrückt wird, oder dass die Paste isostatisch gepresst wird, so dass ein Pressling entsteht,

- dass der Pressling anschließend zum Härten des Polyacrylnitrils aus der Form entnommen und über eine vorgegebene Zeit in Wasser getaucht wird, bis das Polyacrylnitril polymerisiert ist und ein gehärteter Pressling entstanden ist,
- dass der gehärtete Pressling an Luft bei erhöhter Temperatur bis ~100 °C vorgetrocknet wird,
- dass der gehärtete Pressling zum Stabilisieren an Luft bis auf 250 °C hochgeheizt wird, um die restliche Feuchtigkeit zu entfernen,
- dass der gehärtete und getrocknete Pressling in einem Ofen bei > 1.000°C karbonisiert und dann bei > 2.000°C (maximal bis 3.000°C) zu einem Graphitblock niedriger Dichte graphitiert wird.

Die bevorzugte Temperatur beim Graphitieren beträgt 2.500 °C, wobei die Hochtemperaturbehandlung generell unter Luftausschluss, unter Vakuum oder unter Schutzgas vorgenommen wird.

Die Verwendung eines zusätzlichen Bindemittels wie Zucker, Sirup oder Stärke ist bei diesem Verfahren nicht erforderlich, so dass es sich hier auch wegen dem äußerst geringen Wasserbedarf um ein besonders kostengünstiges Verfahren zum Herstellen von Graphit mit niedriger Dichte handelt, dass gut als Dämmmaterial oder anderweitig verwendet werden kann.

Der einzige Nachteil dieses Verfahrens kann darin gesehen werden, dass das Aushärten/Polymerisieren des Polyacrylnitrils bis zwei Wochen dauern kann, was aber in einer Serienproduktion problemlos ausgeglichen werden kann.

Die Erfindung soll nachfolgend an einem Ausführungsbeispiel näher erläutert werden. In den zugehörigen Zeichnungen zeigen:
- Fig. 1:: Papierschnipsel in einem Behälter während der Auflösung in Fasern;
- Fig. 2:: das aufgelöste Papier gemischt mit einem Bindemittel mit pastenähnlicher Konsistenz;
- Fig. 3:: die Mischung nach Fig. 2 nach einem isostatischen Pressvorgang und Aushärten desselben; und
- Fig. 4:: den ausgehärteten Pressling nach der Graphitierung.

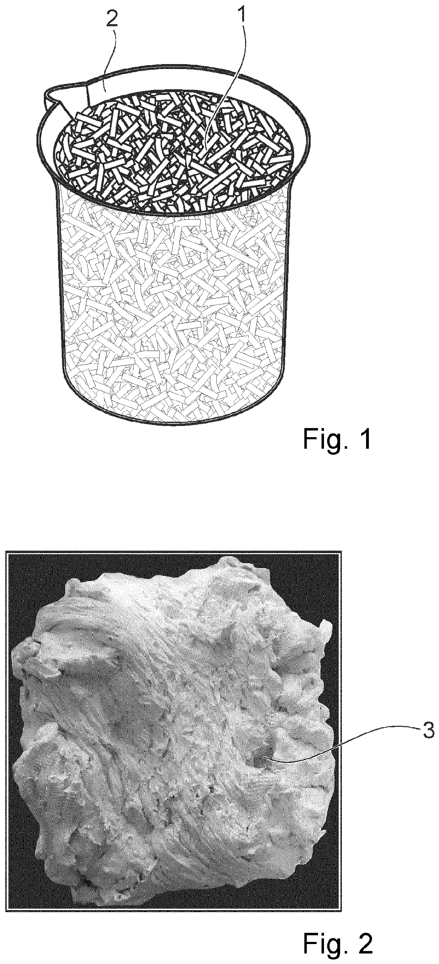

Um Graphit aus Papier/Altpapier, Papierschnipsel oder - streifen 1 herstellen zu können, werden diese zunächst in einem geeigneten Behälter 2 über einen längeren Zeitraum in Dimethylsulfoxid (DMSO) so lange eingeweicht, bis sich das Papier 1 in Fasern aufgelöst hat (Fig. 1). Dieser Vorgang kann durchaus mehrere Tage dauern.

Anschließend werden die in Dimethylsulfoxid eingeweichten Papierfasern in eine geeignete Mischvorrichtung eingebracht und in dieser gemischt und gleichzeitig Polyacrylnitril (PAN) unter Rühren hinzugemischt, bis eine Paste 3, oder ein Gemisch mit pastenähnlicher Konsistenz entstanden ist (Fig. 2) .

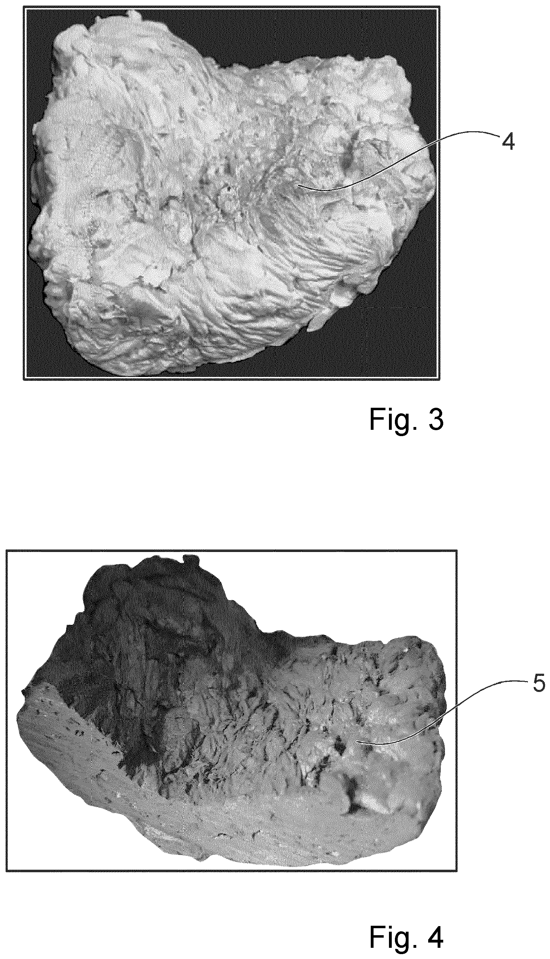

In einem nachfolgenden Schritt wird die Paste 3 in eine geeignete Form eingebracht und nachfolgend überschüssige Flüssigkeit durch Pressen aus der Paste gedrückt, oder die Paste wird isostatisch gepresst, so dass ein Pressling 4 entsteht (Fig. 3).

Anschließend wird der Pressling 4 aus der Pressvorrichtung entnommen und zum Härten des Polyacrylnitrils und über eine vorgegebene Zeit vollständig in Wasser getaucht, bis das Polyacrylnitril polymerisiert ist und ein gehärteter Pressling 4 entstanden ist, der zunächst an Luft getrocknet wird. Der Vorgang des Aushärtens bzw. des Polymerisierens des Polyacrylnitrils im Pressling 4 kann bis zu zwei Wochen dauern, was aber in einer Serienproduktion problemlos ausgeglichen werden kann.

Dieser Vorgang des Polymerisierens des Polacrylnitrils ist der einzige Prozessschritt, bei dem eine vergleichsweise geringe Menge an Wasser zum Einsatz kommt, wobei das Wasser auch mehrfach verwendet werden kann. Die Verwendung von Wasser kann somit auf ein Minimum reduziert werden.

Da das spätere Carbonisieren bzw. Graphitieren des gehärteten Presslings 4 bei sehr hohen Temperaturen vorgenommen wird, besteht die Gefahr, dass infolge des verwendeten Lösungsmittels und des Wassers zum Härten des Presslings 4 Gase und Dämpfe freigesetzt werden, die schließlich zu einer mehr oder weniger ausgeprägten Rissbildung im Endprodukt führen können. Aus diesem Grund wird der gehärtete und an Luft vorgetrocknete und gehärtete Pressling 4 durch langsames Aufheizen in einem Ofen zum Stabilisieren in Luftatmosphäre bis auf 250 °C über einen längeren Zeitraum erwärmt, um übrig gebliebenes Lösungsmittel und Feuchtigkeit möglichst vollständig aus dem Pressling 4 zu entfernen.

Der ausgehärtete und getrocknete Pressling 4 wird anschließend in einem Ofen bei > 1.000°C carbonisiert und dann bei > 2.000°C (maximal bis 3.000°C) zu einem Graphitblock 5 niedriger Dichte graphitiert, wobei die bevorzugte Temperatur beim Graphitieren ca. 2.500 °C betragen sollte.

Es versteht sich, dass die Hochtemperaturbehandlung unter Luftausschluss, im Vakuum oder unter Schutzgas stattfinden muss.

Der besondere Vorteil dieses Verfahrens ist darin zu sehen, dass die Verwendung von Bindemittel wie Zucker, Sirup oder Stärke ist bei diesem Verfahren nicht erforderlich.

Da Wasser nur in geringen Mengen und nur zum Aushärten des Polyacrylnitrils benötigt wird, handelt es sich wegen des äußerst geringen Wasserbedarfs um ein besonders kostengünstiges Verfahren zum Herstellen von Graphit mit niedriger Dichte, dass gut als Dämmmaterial oder anderweitig verwendet werden kann.

### Bezugszeichenliste

- 1: Papier/Altpapier, Papierschnipsel oder -streifen
- 2: Behälter
- 3: Paste
- 4: Pressling
- 5: Graphitblock

## Patentansprüche

1. Verfahren zum wasserarmen Herstellen von Graphit mit niedriger Dichte aus Papier, bevorzugt Altpapier, zur Verwendung als Dämmmaterial, **dadurch gekennzeichnet,**
- **dass** Papier/Altpapier, Papierschnipsel oder -streifen in einem geeigneten Behälter so lange in Dimethylsulfoxid (DMSO) eingeweicht werden, bis sich das Papier in Fasern aufgelöst hat
- **dass** den in Dimethylsulfoxid (DMSO) gelösten Papierfasern Polyacrylnitril (PAN) unter Rühren hinzugemischt wird, bis eine Paste, oder ein Gemisch mit pastenähnlicher Konsistenz entstanden ist,
- **dass** die Paste (3) in eine geeignete Form eingebracht und nachfolgend überschüssige Flüssigkeit durch Pressen aus der Paste gedrückt wird, oder dass die Paste isostatisch gepresst wird, so dass ein Pressling (4) entsteht,
- **dass** der Pressling (4) anschließend zum Härten des Polyacrylnitrils aus der Form entnommen und über eine vorgegebene Zeit in Wasser getaucht wird, bis das Polyacrylnitril polymerisiert ist und ein gehärteter Pressling (4) entstanden ist,
- **dass** der gehärtete Pressling (4) an Luft an Luft bei höherer Temperatur bis ~100 °C vorgetrocknet wird,
- **dass** der gehärtete Pressling (4) zum Stabilisieren an Luft bis auf 250 °C hochgeheizt wird, um die restliche Feuchtigkeit zu entfernen,
- **dass** der gehärtete und getrocknete Pressling (4) in einem Ofen bei > 1.000°C carbonisiert und dann bei > 2.000°C zu einem Graphitblock (5) niedriger Dichte graphitiert wird.

2. Verfahren nach Anspruch 1, **dadurch gekennzeichnet, dass** das Graphitieren des carbonisierten Presslings bei 2.500 °C vorgenommen wird.

3. Verfahren nach Anspruch 1 oder 2, **dadurch gekennzeichnet, dass** die Hochtemperaturbehandlung des gehärteten und getrockneten Presslings (4) generell unter Luftausschluss, unter Vakuum oder unter Schutzgas vorgenommen wird.

## Claims

1. A method for water-sparing production of graphite of low density from paper, preferably waste paper, for use as insulating material, **characterized in that**
- paper/waste paper, paper shreds or paper strips are soaked in dimethyl sulfoxide (DMSO) in a suitable vessel until the paper has dissolved into fibers,
- polyacrylonitrile (PAN) is admixed to the paper fibers dissolved in dimethyl sulfoxide (DMSO) while stirring until a paste or a mixture with a paste-like consistency is formed,
- the paste (3) is introduced into a suitable mold and subsequently excess liquid is forced out of the paste by pressing, or that the paste is pressed isostatically so that a presscake (4) is formed,
- the presscake (4) is thereafter withdrawn from the mold for curing the polyacrylonitrile and immersed in water for a specified time until the polyacrylonitrile is polymerized and a cured presscake (4) is formed,
- the cured presscake (4) is pre-dried in air at a higher temperature up to ~100 °C,
- the cured presscake (4) is heated for stabilization in air up to 250 °C to remove the residual moisture,
- the cured and dried presscake (4) is carbonized in an oven at > 1000°C and then graphitized at > 2000°C to give a graphite block (5) of low density.

2. The method according to claim 1, **characterized in that** the graphitization of the carbonized presscake is carried out at 2500 °C.

3. The method according to claim 1 or 2, **characterized in that** the high-temperature treatment of the cured and dried presscake (4) is generally carried out in the absence of air, under vacuum or under protective gas.

## Revendications

1. Procédé de production à faible teneur en eau de graphite à basse densité à partir de papier, de préférence de vieux papiers, destiné à être utilisé comme matériau isolant, **caractérisée en ce que**
- le papier/les vieux papiers, les chutes de papier ou les bandes de papier sont trempés dans du diméthylsulfoxyde (DMSO) dans un récipient approprié jusqu'à ce que le papier se dissolve en fibres,
- du polyacrylonitrile (PAN) est ajouté aux fibres de papier dissolves dans le diméthylsulfoxyde (DMSO) en agitant jusqu'à formation d'une pâte, ou d'un mélange ayant une consistance pâteuse,
- la pâte (3) est introduite dans un moule approprié et le liquide excédentaire est ensuite expulsé de la pâte par pressage, ou la pâte est pressée de manière isostatique, de sorte qu'il se forme un gâteau de presse (4),
- la gâteau de presse (4) est ensuite retiré du moule pour durcir le polyacrylonitrile et immergé dans l'eau pendant une durée déterminée jusqu'à ce que le polyacrylonitrile soit polymérisé et qu'un gâteau de presse durci (4) soit formé,
- le gâteau de presse durci (4) est pré-séché à l'air à une température plus élevée jusqu'à ~100 °C,
- le gâteau de presse durci (4) est chauffé pour stabilisation dans l'air jusqu'à 250 °C afin d'éliminer l'humidité résiduelle,
- le gâteau de presse durci et séché (4) est carbonisé dans un four à > 1000 °C et ensuite graphitisé à > 2000 °C pour donner un bloc de graphite (5) de basse densité.

2. Méthode selon la revendication 1, **caractérisé en ce que** la graphitisation du gâteau de presse carbonisé est effectuée à 2500 °C.

3. Méthode selon la revendication 1 ou 2, **caractérisé en ce que** le traitement à haute température du gâteau de presse durci et séché (4) est généralement effectué en l'absence d'air, sous vide ou sous gaz protecteur.
